# EUROPÄISCHE PATENTSCHRIFT

(11) **EP 2 579 975 B1**
(45) Veröffentlichungstag und Bekanntmachung des Hinweises auf die Patenterteilung: **28.11.2018**
(21) Anmeldenummer: 11735966.1
(22) Anmeldetag: 08.06.2011
(51) Int. Cl.: B01J 8/12, B01J 8/26, B01J 8/34, B01J 8/38, B01J 8/00, C10J 3/48, C10J 3/56, C10J 3/72, C10J 3/74, F23C 10/00, F23C 10/10

(54) **VERFAHREN ZUM BETRIEBEN EINES WIRBELSCHICHTREAKTORSYSTEMS**
METHOD FOR OPERATING A FLUIDIZED BED REACTOR SYSTEM
PROCÉDÉ DE FONCTIONNEMENT D'UN SYSTÈME DE RÉACTEURS À LIT FLUIDISÉ

(30) Priorität: 11.06.2010 US 353985 P; 11.06.2010 AT 9642010
(43) Veröffentlichungstag der Anmeldung: 17.04.2013
(73) Patentinhaber: Technische Universität Wien, 1040 Wien (AT)
(72) Erfinder: PRÖLL, Tobias, A-1050 Wien (AT); SCHMID, Johannes, A-1050 Wien (AT); PFEIFER, Christoph, A-1140 Wien (AT); HOFBAUER, Hermann, A-1160 Wien (AT)
(74) Vertreter: Ellmeyer, Wolfgang
(86) Internationale Anmeldenummer: PCT/AT2011/000254
(87) Internationale Veröffentlichungsnummer: WO 2011/153568

(56) Entgegenhaltungen:
- WO-A1-2009/021258
- US-A- 3 267 586
- US-A- 3 353 925
- US-A1- 2006 180 060
- BERGUERAND N ET AL: "Design and operation of a 10kWth chemical-looping combustor for solid fuels - Testing with South African coal", FUEL, IPC SCIENCE AND TECHNOLOGY PRESS, GUILDFORD, GB, Bd. 87, Nr. 12, 1. September 2008 (2008-09-01), Seiten 2713-2726, XP022679804, ISSN: 0016-2361, DOI: 10.1016/J.FUEL.2008.03.008 [gefunden am 2008-04-08]
- HSIAOTAO BI ET AL: "Flooding of Gas-Solids Countercurrent Flow in Fluidized Beds", INDUSTRIAL & ENGINEERING CHEMISTRY RESEARCH, Bd. 43, Nr. 18, 1. September 2004 (2004-09-01), Seiten 5611-5619, XP55010093, ISSN: 0888-5885, DOI: 10.1021/ie030772e
- Yong Jin ET AL: "Chapter 7: Effect of Internal Tubes and Baffles" In: "Handbook of Fluidization and Fluid-Particle Systems", 19. März 2003 (2003-03-19), CRC Press Taylor & Francis Group LLC, XP55010008, ISBN: 978-0-82-470259-5 Abschnitt 2.1; Tabelle 1
- JIANJIE BU ET AL: "Influence of ring-type internals on axial pressure distribution in circulating fluidized bed", THE CANADIAN JOURNAL OF CHEMICAL ENGINEERING, Bd. 77, Nr. 1, 1. Februar 1999 (1999-02-01), Seiten 26-34, XP55009888, ISSN: 0008-4034, DOI: 10.1002/cjce.5450770106 in der Anmeldung erwähnt
- KERSTEN S R A ET AL: "Principles of a novel multistage circulating fluidized bed reactor for biomass gasification", CHEMICAL ENGINEERING SCIENCE, OXFORD, GB, Bd. 58, Nr. 3-6, 1. Februar 2003 (2003-02-01), Seiten 725-731, XP004411041, ISSN: 0009-2509, DOI: 10.1016/S0009-2509(02)00601-2 in der Anmeldung erwähnt
- Johannes Schmid ET AL: "G-Volution : Biomasse-Dampfvergaser der zweiten Generation", Neue Energien 2020, publizierbarer Endbericht, 31. Januar 2011 (2011-01-31), Seiten 1-38, XP55010095, Gefunden im Internet: URL:http://www.ilf.com/fileadmin/user_uplo ad/publikationen/7_Biomasse_Dampfvergaser_ zweite_Generation.pdf [gefunden am 2011-10-20]

## Beschreibung

Die vorliegende Erfindung betrifft ein Verfahren mit einem verbesserten Wirbelschichtreaktorsystem aus zumindest zwei Wirbelschichtreaktoren, die als zirkulierende Wirbelschichten ausgeführt sind.

### STAND DER TECHNIK

Sowohl bei physikalischen Verfahren als auch bei chemischen Reaktionen, bei denen es zu einem Stoffaustausch zwischen zwei Phasen kommen soll, sind möglichst große Kontaktoberflächen und gute Durchmischung der Phasen ebenso entscheidend wie lange Verweilzeiten in entsprechenden Kontakt- oder Reaktionszonen, um hohe Umsätze und Ausbeuten zu erzielen. Dies gilt gleichermaßen für alle Phasenübergänge, unabhängig davon, ob es sich um feste, flüssige oder gasförmige Phasen handelt, zwischen denen der Stoffaustausch stattfinden soll.
Eine Möglichkeit zur Verlängerung der Kontaktzeiten und zur Erhöhung der Kontaktoberfläche bzw. der Anzahl an Kontakten mit diskreten Partikeln im Falle von Fest-Flüssig- und Fest-Gasförmig-Kontakten besteht in der Führung der beiden zu kontaktierenden Phasen im Gegenstrom, wie dies beispielsweise für Sprühkolonnen, (mitunter mehrstufige) Fließbettreaktoren, Gegenstromkontaktoren und gepackte Säulen von A.W.M. Roes und W.P.M. Van Swaaij, Chem. Eng. J. 17, 81-89 (1979), beschrieben wird. Als spezielles Beispiel für Verbrennungsreaktionen wird das Gegenstromprinzip in DE 10 2007 005 799 A1 (veröffentlicht am 24. April 2008) beschrieben. Hier wird Pyrolysekoks als Brennstoff in ein wasserstoffreiches Produktgas mit hohem Heizwert übergeführt, wobei ein als Wärmeträger dienendes Schüttgut mittels eines Schüttgutförderers zirkuliert und im Gegenstrom zu dem das Produktgas enthaltenden Gasstrom geführt wird.
Eine weitere Möglichkeit zur Vergrößerung der Oberfläche, die von Roes und Van Swaaij (s.o.) ebenfalls angedeutet wird, ist das Vorsehen von Einbauten, wie sie auf dem Gebiet der gepackten Säulen, Füllkorper- oder Drehtellerkolonnen hinlänglich bekannt sind.

Eine Erhöhung der Verweilzeiten in Kontaktoren oder Reaktoren kann beispielsweise auch durch Vorsehen von Strömungsreglern oder -begrenzern erzielt werden, wodurch Zonen unterschiedlicher Strömungsgeschwindigkeiten der miteinander zu kontaktierenden Phasen geschaffen werden. Als Beispiel für einen derartig konzipierten Fließbettreaktor siehe Kersten et al., Chem. Eng. Sci. 58, 725-731 (2003). Hier wird ein zirkulierender Wirbelschichtreaktor zur Biomassevergasung beschrieben, der durch eine regelmäßige Abfolge von konischen Erweiterungen im Steigrohr ("riser") in Zonen unterschiedlicher Dichte sowohl des zirkulierten Feststoffs als auch der Träger- und Verbrennungsgase unterteilt ist, wobei Feststoffpartikel und Gase im Steigrohr im Gleichstrom geführt werden. Ein ähnliches Beispiel für eine Verbesserung des Strömungsprofils in einem Wirbelschichtreaktor wird von J. Bu und J.-X. Zhu, Canadian J. Chem. Eng. 77, 26-34 (Februar 1999), beschrieben, wo im Steigrohr eines zirkulierenden Wirbelschichtreaktors ringförmige Einbauten vorgesehen sind, die eine vergleichbare Wirkung haben wie die konischen Erweiterungen von Kersten et al. (s.o.).

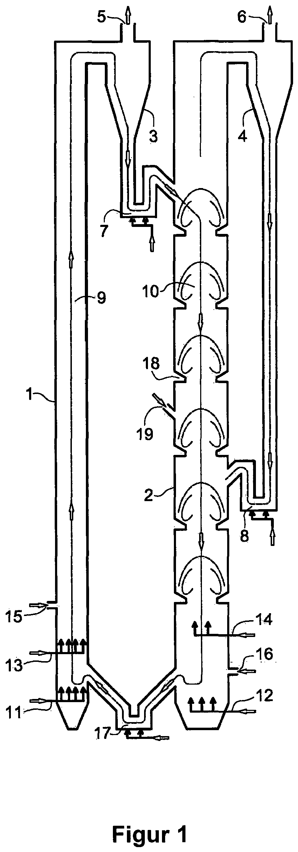

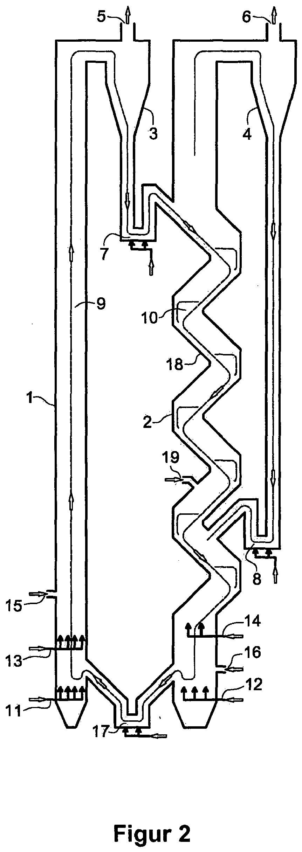

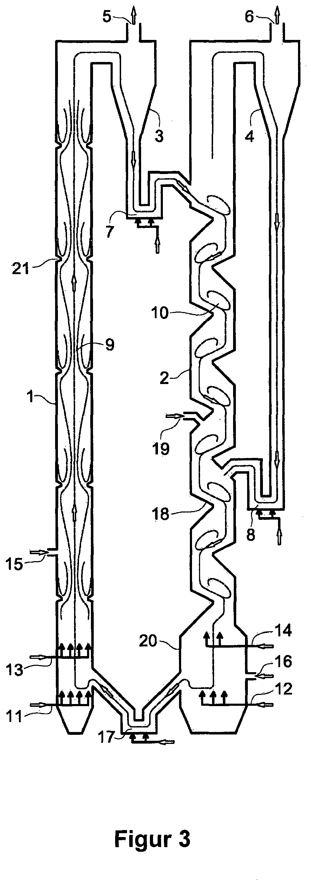

Für Wirbelschichtreaktorsysteme, bei denen zwei oder mehrere fluidisierte Reaktoren miteinander kommunizieren, sind die obigen Maßnahmen zur Verbesserung des Kontakts oder Stoffaustauschs zwischen zwei Phasen, konkret zwischen einer festen und einer flüssigen oder gasförmigen Phase, bisher jedoch unbekannt. Dies liegt freilich auch daran, dass in der Vergangenheit der Partikelaustrag aus dem zweiten Reaktor zwingend in den ersten Reaktor eingespeist werden musste, solange es sich um zwei schnell fluidisierte, d.h. Partikel transportierende, Wirbelschichtreaktoren handelte, um den Kreislauf des Feststoffstroms zu schließen. Hierzu sei beispielsweise auf die EP 1.637.574 A1 verwiesen. In den dortigen Fig. 1 und 2 wird ein Wirbelschichtreaktorsystem aus zwei kommunizierenden Reaktoren beschrieben, die beide schnell fluidisierte Reaktoren sein können. Aufgrund der Notwendigkeit der kreuzweisen Einspeisung des jeweils aus einem Reaktor ausgetragenen Feststoffs in den anderen ergibt sich für beiden Reaktoren zwingend eine Gleichstrom-Führung der jeweiligen Gas- und Feststoffströme. In Fig. 3 der EP 1.637.574 A1 wird zwar auch ein System aus zwei kommunizierenden Reaktoren beschrieben, bei dem Gas und Feststoff im zweiten Reaktor im Gegenstrom zueinander geführt werden. Allerdings handelt es sich beim zweiten Reaktor um einen blasenbildenden oder BFB-Reaktor (BFB steht für "bubbling fluidized bed"), bei dem kein Feststoffaustrag am Reaktorkopf erfolgt. Das Reaktorsystem gemäß Fig. 3 umfasst somit lediglich einen schnell fluidisierten Wirbelschichtreaktor, in dessen Partikelrückführung formal ein blasenbildender Reaktor zwischengeschaltet ist, durch den sich der Partikelstrom abwärts bewegt, bevor er in den ersten Reaktor rezykliert wird.

Die Erfinder des vorliegenden Erfindungsgegenstands haben hingegen in ihren früheren Anmeldungen AT A 1272/2007 und WO 2009/021258 ein neues Wirbelschichtreaktorsystem vorgestellt, bei dem zwei miteinander kommunizierende, schnell fluidisierte, d.h. Partikel transportierende Wirbelschichtreaktoren durch eine Partikelleitung in der unteren Hälfte, vorzugsweise im unteren Drittel oder Viertel, miteinander verbunden sind, so dass die zwischen den beiden Reaktoren zirkulierenden Feststoffpartikel nicht notwendigerweise zwei Partikelabscheider an den Reaktorköpfen passieren müssen. Stattdessen, oder auch zusätzlich dazu, können die Partikel nun direkt (oder auch über einen optionalen zwischengeschalteten dritten Reaktor) von einem in den anderen Reaktor übergeführt werden, um den Feststoffzyklus zu komplettieren. Doch auch bei diesem neuen System der Erfinder wäre eine Verbesserung des Kontakts zwischen dem zirkulierenden Feststoff und dem im Reaktorsystem behandelten Feed wünschenswert.

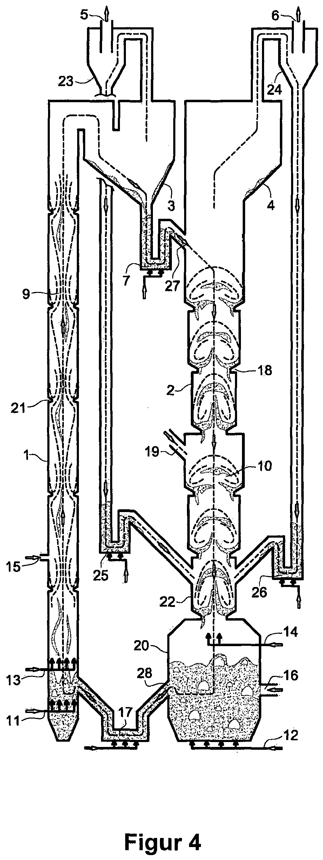

Berguerand et al., Fuel 87, 2713-2726 (2008), offenbaren ein kompliziertes Wirbelschichtreaktorsystem, das formal aus mehreren, unterschiedlich betriebenen Reaktoren "a", "b" und "d" (mit einem dazwischen liegenden Zyklon "c"; Fig. 4) besteht, wobei Reaktor "d" durch mehrere, als Unter- bzw. Überlaufwehre dienende Trennwände in mehrere Abschnitte 2 bis 4 (Fig. 2 und 3) unterteilt ist. In diesem Reaktorsystem werden insgesamt zwei schnell fluidisierte (Reaktor "a" und Abschnitt 3 von Reaktor "d") und zwei stationäre (Abschnitte 4 und 2 von Reaktor "d") Wirbelschichten erzeugt.

US 3.353.925 A offenbart eine Kombination aus drei Reaktoren, einem schnell fluidisierten Reaktor "10", der mehrere Verengungen "94" des Reaktorquerschnitts in unterschiedlichen Höhen aufweist, und zwei stationären Reaktoren "12" und "26" (Fig. 1), wobei Letzterer als "Stripper" zum Austreiben von Produktgasen dient und zwischen den beiden Reaktoren "10" und "12" angeordnet ist. Sämtliche Partikel zirkulieren in diesen drei Reaktoren in der Reihenfolge 10 - 26 - 12.
Bi et al., Ind. Eng. Chem. Res. 43, 5611-5619 (2004), offenbaren ein System aus zwei Reaktoren, wovon ein "Riser" schnell fluidisiert ist und ein "Stripper" ein stationäres "bubbling bed" ist, das Prallbleche zum Zerstören großer Blasen umfasst.

### OFFENBARUNG DER ERFINDUNG

Die vorliegende Erfindung stellt daher ein Verfahren zum Betreiben eines Wirbelschichtreaktorsystems aus zumindest zwei Wirbelschichtreaktoren zur Durchführung chemischer Reaktionen bereit, wobei ein erster und ein zweiter Reaktor jeweils als zirkulierende Wirbelschicht betrieben werden, indem über jeweils zumindest einen Fluideinlass im Boden des jeweiligen Reaktors und/oder unmittelbar oberhalb davon Fluid zur Erzeugung einer schnell fluidisierten Partikelwirbelschicht eingeleitet wird und über eine einen Partikelabscheider umfassende Partikelleitung Wirbelschichtpartikel vom ersten in den zweiten Reaktor transportiert werden sowie eine in der unteren Hälfte des zweiten Reaktors ausleitende Partikelleitung Wirbelschichtpartikel in den ersten Reaktor rücktransportiert werden und über eine einen Partikelabscheider umfassende Partikelrückführung Wirbelschichtpartikel aus dem zweiten Reaktor rückgeführt werden,
wobei das Verfahren dadurch gekennzeichnet ist, dass zumindest im zweiten Reaktor durch einen oder mehrere Strömungsregler in Form von Verengungen des Reaktorquerschnitts voneinander getrennte, jeweils über einem Strömungsregler liegende Reaktionszonen zur Durchführung der chemischen Reaktionen vorgesehen sind und die Partikelleitung zum Transport von Wirbelschichtpartikeln vom ersten in den zweiten Reaktor oberhalb zumindest eines Strömungsreglers in den zweiten Reaktor einmündet, wodurch in den Reaktionszonen oberhalb jeglicher Strömungsregler, die unterhalb der Einmündung der Partikelleitung zum Transport von Wirbelschichtpartikeln vom ersten in den zweiten Reaktor liegen, Partikel im Gegenstrom zum Fluidstrom geführt werden; und
dass über die Partikelrückführung Partikel unterhalb zumindest eines im zweiten Reaktor vorgesehenen Strömungsreglers in den zweiten Reaktor und/oder in die untere Hälfte des ersten Reaktors eingeleitet werden, wodurch diese Partikel im zweiten Reaktor im Gegenstrom zu über die Partikelleitung aus dem ersten Reaktor eingeleiteten Partikeln geführt werden.

Durch dieses erfindungsgemäße Verfahren mit einem zwei schnell fluidisierte, partikeltransportierende Reaktoren umfassenden Wirbelschichtreaktorsystem ist es nun erstmals möglich, die Vorteile des Gegenstromprinzips mit jenen von mittels Strömungsreglern gesteuerten Strömungsprofilen zu kombinieren, woraus eine bessere Durchmischung, verlängerte Kontaktzeiten und somit allgemein ein verbesserter Kontakt zwischen dem zirkulierten Feststoff und den damit zu kontaktierenden Phasen resultiert, seien es weitere feste, flüssige oder gasförmige Phasen. Zudem ist zum Heben der Wirbelschichtpartikel, d.h. zur Ausbildung und Aufrechterhaltung der Wirbelschicht, ein geringerer Fluidvolumenstrom erforderlich als ohne Strömungsregler. All dies ermöglicht unter anderem auch einen wirtschaftlicheren Betrieb eines solchen Wirbelschichtreaktorsystems.

Die Unterteilung zumindest eines Reaktors des Wirbelschichtreaktorsystems in mehrere Reaktionszonen ermöglicht beispielsweise die Durchführung unterschiedlicher physikalischer oder chemischer Reaktionen, z.B. einer gezielten Abfolge chemischer Reaktionen, in den einzelnen Reaktionszonen. Die geeignete Wahl der Einmündung der Partikelleitung aus dem ersten in den zweiten Reaktor ermöglicht - zusätzlich zur Herbeiführung eines Gegenstroms zwischen den Partikeln aus dem ersten Reaktor und dem Fluidstrom im zweiten Reaktor - eine Steuerung der in den Reaktionszonen ablaufenden Reaktionen.
Mit dem Ausdruck "Fluid" sind hierin generell Flüssigkeiten, Gase und Gemische davon gemeint, wobei für spezielle Anwendungen des erfindungsgemäßen Verfahrens mit einem Wirbelschichtreaktorsystem, wie z.B. CLR ("chemical looping reforming"), CLC ("chemical looping combustion"), Kohle- oder Biomassevergasungen und dergleichen, Gase als Fluide bevorzugt werden. Aus diesem Grund ist umgekehrt hierin unter "Gas" auch der allgemeinere Ausdruck "Fluid" zu verstehen, solange nicht auf konkrete Anwendungen Bezug genommen wird, bei denen der Einsatz anderer Fluide als von Gasen technisch nicht möglich ist.

Dadurch dass die Partikelleitung vom ersten in den zweiten Reaktor oberhalb eines untersten Strömungsreglers in den zweiten Reaktor einmündet und sich unterhalb der Einmündungsstelle somit ein Gegenstrom zwischen den im zweiten Reaktor absinkenden Partikeln und dem aufsteigenden Fluidstrom ausbildet, existiert zumindest eine Reaktionszone, in der dieser Gegenstrom voll zur Wirkung kommt. Sind beispielsweise zwei Strömungsregler, d.h. drei Reaktionszonen, vorgesehen und mündet die genannte Partikelleitung in der mittleren Reaktionszone in den zweiten Reaktor ein, existiert zusätzlich eine Reaktionszone, nämlich die oberste, in der Fluid und Feststoffe im Gleichstrom geführt werden. Sollen jedoch Fluid und Feststoffe in allen Reaktionszonen im Gegenstrom geführt werden, mündet die Partikelleitung vorzugsweise oberhalb des obersten Strömungsreglers ein.

In Abhängigkeit von der Stärke des Fluidstroms im zweiten Reaktor und von den Eigenschaften der zwischen den beiden Reaktoren zirkulierten Partikel (d.h. spezifisches Gewicht, Form, Oberflächenbeschaffenheit usw.) werden die Partikel unterschiedlich stark vom Fluidstrom mitgetragen und verteilen sich daher in unterschiedlichem Ausmaß auf die einzelnen Reaktionszonen. Die Folge ist eine steuerbare Aufenthaltswahrscheinlichkeit der Partikel in den einzelnen Reaktionszonen des zweiten Reaktors, so dass in tiefer liegenden Reaktionszonen in der Regel eine größere Masse an Partikeln anzutreffen ist als in höher liegenden. Dienen die Partikel beispielsweise (auch) als Wärmeträger, wie z.B. in CLR-Anwendungen, stehen in den Reaktionszonen des zweiten Reaktors unterschiedliche Wärmemengen für chemische oder auch physikalische Reaktionen zur Verfügung, im Falle von CLR-Reaktoren somit für die Reformierung des Brennstoffs im "Brennstoffreaktor".

Bei Gegenwart von Partikeln mit unterschiedlichen Eigenschaften, z.B. unterschiedlich schweren und/oder unterschiedlich geformten Teilchen, im System kann eine Anhäufung von leichteren Teilchen bzw. solchen mit größerer Oberfläche (die nachstehend der Einfachkeit halber kollektiv als "leichtere" Partikel bezeichnet werden) in höher liegenden Reaktionszonen bewirkt werden, während sich in tieferen Reaktionszonen logischerweise schwerere Teilchen bzw. solche mit kleinerem Verhältnis zwischen Oberfläche und Volumen (nachstehend kollektiv als "schwerere" Partikel bezeichnet) ansammeln. In der Folge werden auch "leichtere" Teilchen eher am Kopf des zweiten Reaktors ausgetragen, während über die Partikelleitung zum Rücktransport von Wirbelschichtpartikeln in den ersten Reaktor bevorzugt "schwerere" Partikel zirkuliert werden. Das bedeutet, dass es zusätzlich zur Gegenstromwirkung und der Ausbildung verschiedener Reaktionszonen zu einer Sichtung der im System vorhandenen Partikel kommt. Dabei können unterschiedliche Partikel sowohl gezielt in das System eingespeist werden als auch darin als Resultat physikalischer oder chemischer Reaktionen gebildet werden, beispielsweise durch Abrieb oder Verbrennung (z.B. Flugasche).

Die Strömungsregler sind beliebige Verengungen des Reaktorquerschnitts. Somit liegt etwa ein "Zickzack"-Verlauf des Reaktorrohrs ebenso im Schutzumfang der Erfindung wie das Vorsehen diverser Einbauten, wie z.B. zentraler oder seitlicher Prallflächen, ringförmiger Einschnürungen usw., die zudem in beliebigem Winkel zur Strömungsrichtung stehen können. Die Art der jeweiligen Strömungsregler wird dabei hauptsächlich durch den Verwendungszweck des Wirbelschichtreaktorsystems und durch das jeweils einsetzbare Reaktorwandmaterial vorgegeben. Beispielsweise kommen für CLR-, CLC-, Vergasungs- oder andere, Hochtemperaturen erfordernde Anwendungen vorwiegend Feuerfeststoffe und andere temperaturbeständige Materialien, wie z.B. Schamotte-Ziegel, Beton oder auch Graphit, als Wandmaterial zum Einsatz.
Die vorliegende Erfindung umfasst auch Ausführungsformen, bei denen zusätzlich zum zweiten auch der erste Reaktor und/oder etwaige zusätzliche Reaktoren mit Strömungsreglern ausgestattet ist/sind, um darin Zonen unterschiedlicher Partikeldichte zu definieren. Beispielsweise können dadurch bei CLC- und CLR-Anwendungen, wo ein als Wärmeträger und Oxidationsmittel dienendes, zwischen den Reaktoren zirkuliertes Metalloxid im ersten Reaktor (dem "Luftreaktor") regeneriert (d.h. reoxidiert) wird, unterschiedliche Verweilzeiten der zu oxidierenden Oxidpartikel auf unterschiedlicher Höhe bzw. in Zonen mit unterschiedlicher Sauerstoffdichte eingestellt werden, was bei geeigneter Wahl des Luftstroms für eine schonendere bzw. wirtschaftlichere Reaktionsführung der Oxidation sorgen kann.

Im erfindungsgemäßen Verfahren weist der zweite Reaktor eine Partikelrückführung mit einem Partikelabscheider auf, die unterhalb zumindest eines im zweiten Reaktor vorgesehenen Strömungsreglers in den zweiten Reaktor und/ oder in die untere Hälfte des ersten Reaktors einmündet. Dies bewirkt einerseits, dass die in den zweiten Reaktor rezyklierten Partikel zumindest eine oberhalb der Einmündungsstelle der Partikelrückführung gelegene Reaktionszone passieren müssen, bevor sie gegebenenfalls wieder am Reaktorkopf ausgetragen und erneut rezykliert werden. Andererseits, nämlich bei Einmündung der Partikelrückführung des zweiten Reaktors an einer Stelle in der unteren Hälfte, vorzugsweise im unteren Drittel oder Viertel, des ersten Reaktors ist die Verweilzeit der Partikel im ersten Reaktor ausreichend lange, um dort ablaufende Reaktionen eingehen zu können. Im obigen Beispiel eines Reaktorsystems für CLR-Anwendungen ist dies etwa die Reoxidation des zwischen den Reaktoren zirkulierten Wärmeträgers/Oxidationsmittels. Weist die Partikelrückführung des zweiten Reaktors einen Strömungsteiler auf, sind auch beide Ausführungsformen gleichzeitig realisierbar.
Ist ein solcher Strömungsteiler vorhanden, kann auch ein Teil des im Partikelabscheider aufgefangenen Feststoffs in das Reaktorsystem rezykliert und ein anderer Teil aus dem System ausgeleitet werden, beispielsweise um diesen Feststoffanteil einer externen Regenerationsbehandlung zu unterziehen, oder weil er, z.B. durch Abrieb, nicht mehr die gewünschte Partikelgröße aufweist und durch passendes Teilchenmaterial ersetzt werden soll.
Einer oder beide der Partikelabscheider von erstem und zweitem Reaktor kann/können darüber hinaus zwei- oder mehrstufig ausgeführt sein. So kann beispielsweise der Partikelabscheider des zweiten Reaktors zusätzlich zu einem Schwerkraftabscheider, der die darin abgeschiedenen (z.B. schwereren) Feststoffe direkt in den zweiten Reaktor rezykliert, auch einen Fliehkraftabscheider, z.B. einen Zyklon, umfassen, aus dem die darin abgeschiedenen (z.B. leichteren) Partikel an anderer Stelle in den zweiten Reaktor oder auch in den ersten Reaktor rezykliert oder auch ausgeleitet werden. Alternativ oder zusätzlich dazu kann ein zweistufiger Partikelabscheider für den ersten Reaktor vorgesehen sein, in dessen beiden Stufen leichtere und schwerere Partikel aufgefangen werden, die in unterschiedlicher Höhe in den zweiten Reaktor eingeleitet werden, um ihre Verweilzeiten im zweiten Reaktor zu erhöhen.
Aus demselben Grund können auch die beiden Partikelrückführungen eines zweistufigen Partikelabscheiders des zweiten Reaktors auf unterschiedlicher Höhe in den zweiten Reaktor einmünden, z.B. jeweils ober- und unterhalb eines Strömungsreglers. Dadurch können im erfindungsgemäßen Verfahren nicht nur Partikel im Gegenstrom zum Fluidstrom, sondern gleichzeitig auch Partikel unterschiedlicher Größe im Gegenstrom zueinander geführt werden, was speziell in Fällen, bei denen Partikel unterschiedlicher Größe aus chemischen Reaktionen im Reaktorsystem resultieren, vorteilhaft sein kann, z.B. um feste Reaktionsprodukte erneut bzw. für eine längere Zeitspanne mit den eigentlichen Wirbelschichtpartikeln in Kontakt zu bringen.
Generell sind weder die Bau- und Funktionsweise der Partikelabscheider des erfindungsgemäßen Verfahrens und ihrer einzelnen Stufen noch das Ziel der davon wegführenden Leitungen speziell eingeschränkt, solange zumindest eine Partikelleitung vom ersten in den zweiten Reaktor führt und oberhalb zumindest eines Strömungsreglers in Letzteren einmündet. Das in allen übrigen Partikelabscheidern bzw. Ableitungen davon anfallende Teilchenmaterial kann an beliebigen Stellen in das Wirbelschichtreaktorsystem rezykliert oder auch daraus ausgeleitet werden, wenn es dem jeweiligen Anwendungszweck des Reaktorsystems dient. Sämtliche Partikelleitungen können gemäß vorliegender Erfindung mit Fluid- bzw. Gassperren versehen, d.h. vorzugsweise fluidisiert, sein, um durch die so erzeugten Druckunterschiede Übertritte von Fluiden, insbesondere Gasen, aus einem Reaktor in den anderen zu verhindern. Als Partikelleitungen kommen neben einfachen Rutschen auch Band- oder Schneckenförderer infrage. In bevorzugten Ausführungsformen mit fluidisierten Leitungen umfassen diese jedoch besonders bevorzugt Siphone als Gassperren, wodurch unerwünschte Gas-, aber auch Feststoffübertritte aus einem Reaktor in den anderen besonders wirksam unterbunden werden.
Besonders bevorzugt ist die Partikelleitung zum Rücktransport von Wirbelschichtpartikeln aus dem zweiten in den ersten Reaktor fluidisiert und noch bevorzugter mit einem Siphon versehen. Dadurch können nicht nur, wie bereits erwähnt, unerwünschte Stoffübergänge zwischen den Reaktoren, sondern auch ein Verstopfen der Partikelleitung verhindert werden, zumal diese Partikelleitung in besonders bevorzugten Ausführungsformen auf geringer Höhe des ersten Reaktors in diesen einmündet, wodurch eine kontinuierliche Betriebsweise des Reaktorsystems gewährleistet werden kann.
Beide Reaktoren können in an sich bekannter Weise mit gestuften Fluideinlässen, d.h. mehreren Fluideinlässen auf unterschiedlicher Höhe des jeweiligen Reaktors, ausgestattet sein, was die Aufrechterhaltung der jeweiligen Wirbelschicht in den Reaktoren unterstützt. Bei Vorliegen von gestuften Fluideinlässen im ersten Reaktor kann eine fluidisierte Partikelleitung zum Rücktransport von Wirbelschichtpartikeln aus dem zweiten in den ersten Reaktor auch den untersten Fluideinlass zum ersten Reaktor ersetzen.
Darüber hinaus können in bestimmten Ausführungsformen zusätzlich zu den beiden genannten Reaktoren auch noch ein oder mehrere weitere Reaktoren vorgesehen sein, die an beliebiger Stelle im Wirbelschichtreaktorsystem eingebaut sein können. So kann etwa ein dritter Reaktor parallel zum ersten oder zum zweiten Reaktor betrieben werden, so dass dieser dritte Reaktor ausschließlich mit dem zweiten bzw. dem ersten Reaktor kommuniziert. Alternativ oder zusätzlich dazu kann ein dritter Reaktor - in beiden Richtungen des zirkulierenden Partikelstroms - zwischen dem ersten und zweiten Reaktor zwischengeschaltet sein. Das heißt, der Partikelstrom aus dem ersten Reaktor kann zunächst in einen dritten Reaktor geleitet werden, bevor er aus diesem in den zweiten Reaktor geführt wird, oder die Rückführung der Partikel aus dem zweiten in den ersten Reaktor erfolgt über einen dritten Reaktor. In letzterem Fall kann ein solcher dritter Reaktor sowohl in der Partikelleitung zum Rücktransport von Wirbelschichtpartikeln aus dem zweiten in den ersten Reaktor als auch in einer in den ersten Reaktor mündenden Partikelrückführung aus dem Partikelabscheider des zweiten Reaktors angeordnet sein. Beliebige Kombinationen dieser Ausführungsformen, d.h. unter Einbau mehrerer zusätzlicher Reaktoren, sind ebenfalls möglich.
Die Betriebsweise des dritten und jedes weiteren Reaktors ist dabei nicht speziell eingeschränkt. Sie können als schnell fluidisierte Wirbelschichtreaktoren, als blasenbildende Reaktoren oder auf beliebige andere Weise betrieben werden, solange die vorteilhaften Effekte des erfindungsgemäßen Verfahrens nicht beeinträchtigt werden.
Die Erfindung wird nachstehend unter Bezugnahme auf konkrete, in den beiliegenden Zeichnungen dargestellte Ausführungsformen noch detaillierter beschrieben.

### KURZBESCHREIBUNG DER ZEICHNUNGEN

Fig. 1 zeigt eine Ausführungsform des erfindungsgemäßen Verfahrens mit einem Wirbelschichtreaktorsystem und mit Strömungsreglern nur im zweiten Reaktor.
Fig. 2 zeigt eine Ausführungsform des erfindungsgemäßen Verfahrens mit einem Wirbelschichtreaktorsystem und mit einer anderen Art von Strömungsreglern nur im zweiten Reaktor.
Fig. 3 zeigt eine Ausführungsform des erfindungsgemäßen Verfahrens mit Strömungsreglern in beiden Reaktoren und einem zwischengeschalteten dritten Reaktor.
Fig. 4 zeigt eine ähnliche Ausführungsform des erfindungsgemäßen Verfahrens wie in Fig. 3, jedoch mit zweistufigen Partikelabscheidern.
Fig. 5 zeigt eine ähnliche Ausführungsform des erfindungsgemäßen Verfahrens wie in Fig. 4, jedoch mit gekreuzter Partikelrückführung.
Fig. 6 ist eine Detailansicht eines durch Strömungsregler in Reaktionszonen unterteilten Reaktors in einem erfindungsgemäßen Verfahren.
Fig. 7 ist ein Foto einer Reaktionszone eines Wirbelschichtreaktorsystems des erfindungsgemäßen Verfahrens.

### DETAILLIERTE BESCHREIBUNG DER ERFINDUNG

Die Erfindung betrifft ein Verfahren gemäß Anspruch 1, wobei ein Wirbelschichtreaktorsystem aus zumindest zwei Wirbelschichtreaktoren, die jeweils als zirkulierende Wirbelschicht ausgeführt sind, wovon zumindest einer der Reaktoren durch einen oder mehrere Strömungsregler in voneinander getrennte Reaktionszonen unterteilt ist. In zumindest einem Teil dieser Reaktionszonen werden darüber hinaus die miteinander umzusetzenden Stoffströme im Gegenstrom zueinander geführt, d.h. ein Feststoffstrom wird im Gegenstrom zu einem Reaktionsgasstrom geführt, und/oder zwei Feststoffströme, z.B. ein als Reaktant und ein als Katalysator dienender Feststoff, werden im Gegenstrom zueinander geführt.
Diese Art der Stromführung basiert, wie eingangs bereits erwähnt wurde, auf der früheren Erfindung der Erfinder des vorliegenden Anmeldungsgegenstands wie in AT A 1272/2007 und WO 2009/021258 beschrieben. Ohne die dort geoffenbarte Partikelleitung zur Verbindung der beiden Reaktoren und (direkten) Rückführung des Partikelstroms vom zweiten in den ersten Reaktor wäre die Implementierung des Gegenstromsprinzips technisch völlig unmöglich. Reaktionszonen hätten zwar vorgesehen werden können, allerdings werden deren Effekte durch gegenläufige Stoffströme darin ebenfalls deutlich verstärkt, so dass alle drei Komponenten der vorliegenden Erfindung zusammen synergistische Wirkung zeigen.

Nachstehend werden mehrere bevorzugte Ausführungsformen des Verfahrens der Erfindung unter Bezugnahme auf die Zeichnungen anhand der Betriebsweise des Wirbelschichtreaktorsystems näher erläutert, für die zu Illustrationszwecken ein CLC-System, d.h. Chemical Looping Combustion, herangezogen wird. Es versteht sich jedoch, dass das erfindungsgemäße Verfahren auch für beliebige andere chemische Reaktionen einsetzbar ist.
CLC ist ein Energieumwandlungsprozess mit theoretisch keinerlei Wirkungsgradverlust, bei dem ein Brennstoff, wie z.B. Kohle oder Erdgas, in einem Brennstoff- oder Verbrennungsreaktor mithilfe eines Sauerstoffträgers als Oxidationsmittel und Katalysator, üblicherweise unter Luftausschluss, verbrannt wird, während der Sauerstoffträger in einem zweiten Reaktor, dem Luftreaktor, regeneriert wird. Als Sauerstoffträger/ Katalysator dienen zumeist Metalloxide, die im Brennstoffreaktor reduziert und im Luftreaktor reoxidiert werden. Bei der Verbrennung entstehen vorwiegend CO₂ und H₂O, aus denen nach Kondensation des Wassers CO₂ erhalten werden kann.
Fig. 1 zeigt eine bevorzugte Ausführungsform mit zwei schnell fluidisierten, d.h. partikeltransportierenden Reaktoren 1 und 2. Aus dem ersten Reaktor 1 ausgetragener Feststoff wird in einem Partikelabscheider 3 gesammmelt, während Gas am Auslass 5 austritt. Für das Beispiel CLC ist dieser erste Reaktor 1 der Luftreaktor, so dass an 5 im Wesentlichen N₂ und O₂ austreten, während der Sauerstoffträger, d.h. z.B. das Metalloxid, an 3 abgeschieden und über eine Partikelleitung 7 in den zweiten Reaktor 2 eingespeist wird. Der Partikelabscheider 3 ist nicht speziell eingeschränkt und kann beispielsweise als Schwerkraft- oder Fliehkraftabscheider, vorzugsweise als Zyklon, ausgeführt sein. Die Partikelleitung 7 ist ebenfalls nicht eingeschränkt und kann etwa ein Schneckenförderer, eine einfache Rutsche oder dergleichen sein. Wie durch die schwarzen Pfeile in Fig. 1 angedeutet wird, ist sie jedoch vorzugsweise mit Inertgas fluidisiert, so dass als Gassperre zwischen den Reaktoren bevorzugt ein Siphon einsetzbar ist, obwohl auch jede andere Gassperre infrage kommt, die einen ausreichenden Druckunterschied zwischen den zu trennenden Gasräumen bewirkt, wie z.B. fluidisierte Rutschen oder dergleichen.
Durch die Stelle der Einmündung der aus dem ersten Reaktor 1 ausleitenden Partikelleitung 7 in den zweiten Reaktor 2 ist steuerbar, in welchem Ausmaß die Partikel im Gegenstrom zu den Stoffströmen im zweiten Reaktor, d.h. Gas- bzw. Fluid- oder Feststoffströmen, geführt werden. (Produkt-)Stoffströme sind in allen Zeichnungen durchwegs mit weißen Pfeilen gekennzeichnet. In Fig. 1 ist eine bevorzugte Ausführungsform dargestellt, bei der Leitung 7 an einer weit oben liegenden Stelle, nämlich oberhalb des obersten Strömungsreglers 18, d.h. in die oberste Reaktionszone 10, worauf später noch näher eingegangen wird, einmündet. Von dort sinken die Partikel innerhalb der Wirbelschicht des zweiten Reaktors 2 abwärts, so dass ein Gegenstrom dieser Partikel zum Gas- und mitunter auch Feststoffstrom in diesem Reaktor über den überwiegenden Teil seiner Höhe gewährleistet ist.
Wirbelschichtreaktor 2, für das Beispiel CLC der Brennstoffreaktor, ist ebenfalls schnell fluidisiert und weist einen Gasauslass 6, einen Partikelabscheider 4 und eine Partikelleitung oder -rückführung 8 auf, die im vorliegenden Beispiel ebenfalls fluidisiert dargestellt und somit vorzugsweise ein Siphon ist, obwohl der Partikelabscheider 4 und die Partikelleitung 8 wiederum nicht speziell eingeschränkt sind. Im Beispiel aus Fig. 1 mündet Partikelleitung 8 in den zweiten Reaktor 2 ein und führt somit ausgetragenen Feststoff in diesen zurück. Die in Fig. 1 eingezeichnete Stelle der Einmündung der Rückführung 8 auf relativ geringer Höhe des Reaktors 2 bewirkt, dass der größere Anteil des so rezyklierten Feststoffs in der Wirbelschicht des Reaktors (z.B. Aschepartikel, die noch einen Anteil an brennbarem Material enthalten) wieder aufsteigt und somit im Gegenstrom zu den vom ersten Reaktor 1 zugeführten Partikeln geführt wird. Letztere passieren Reaktor 2 somit sowohl im Gegenstrom zum Gasstrom als auch zu einem Feststoffstrom darin. Ein kleinerer Anteil sinkt hingegen ab und gelangt aufgrund Einspeisung bei relativ geringer Höhe
Obwohl beide Reaktoren somit partikeltransportierend sind, ist Reaktor 2 im Gegensatz zum vollständig partikeltransportierenden Reaktor 1 nur teilweise transportierend ausgeführt. Das heißt, während aus Reaktor 1 sämtliche darin als Wirbelschicht vorhandene Feststoffe ausgetragen und in den zweiten Reaktor 2 eingespeist werden, trägt Reaktor 2 nur einen Teil der darin geführten Feststoffpartikel am Reaktorkopf aus. In der Praxis, wie z.B. bei CLC-Anwendungen, sogar nur einen mehr oder weniger geringen Anteil, zumal einerseits möglichst die gesamte Masse des Sauerstoffträgers zwischen den beiden Reaktoren zykliert werden und andererseits fester Brennstoff in Reaktor 2 möglichst vollständig verbrannt werden soll. Der Austrag aus Reaktor 2 besteht daher in diesem Beispiel vorwiegend aus relativ feinteiligen Bestandteilen, wie z.B. Abrieb des Sauerstoffträgers oder Flugasche. Allerdings findet sich bei der praktischen Anwendung immer auch ein gewisser Anteil an gröberkörnigen, "schwereren" Partikeln im Austrag aus Reaktor 2, da für alle Partikel an jedem Ort innerhalb des Reaktorsystems eine definierte (wenn auch mitunter äußerst geringe) Aufenthaltswahrscheinlichkeit existiert.

Beide Reaktoren 1, 2 weisen zweiteilige Vertrimmungen 11-14 auf, d.h. das Fluidisierungsgas oder -fluid wird auf jeweils unterschiedlichen Höhen in den jeweiligen Reaktor eingeleitet, was unter anderem die Aufrechterhaltung der Wirbelschichten fördert und zudem leichter ermöglicht, unterschiedliche Fluids/Gase in den jeweiligen Reaktor einzuleiten. Beispielsweise könnte im Falle von CLC an 11 Frischluft in den Reaktor 1 eingeleitet werden, während an 13 ein von Auslass 5 rezykliertes Stickstoff/Sauerstoff-Gemisch zugeführt werden könnte. Durch die Gegenwart von Zuleitung 15 kann auch sowohl an 11 als auch an 13 Frischluft zugeführt werden, während an 15 der rezyklierte Gasstrom zurückgeführt wird, oder es kann an 15 (oder auch an 11 und/oder 13) beispielsweise reiner Sauerstoff oder ein zusätzlicher Brennstoff zum Erhitzen der Partikel in Reaktor 1 eingespeist werden. Der jeweilige Zweck der Fluidzuleitungen ist gemäß vorliegender Erfindung jedoch nicht speziell eingeschränkt.

Partikelleitung 17 verbindet die beiden Reaktoren auf bevorzugte Weise am unteren Ende und führt den Feststoffstrom, im Falle von CLC das Metalloxid, in den ersten Reaktor zurück. Für Leitung 17 gilt dasselbe wie für die Partikelleitungen 7 und 8, und auch sie ist daher vorzugsweise fluidisiert und als Siphon ausgebildet. Die Ausleitung von Partikelleitung 17 aus dem zweiten Reaktor zwischen den Vertrimmungen 12 und 14 bewirkt, dass der an 12 zugeleitete Teil des Gases, z.B. Methan, noch in Kontakt mit dem Partikelstrom kommen kann, bevor dieser den Reaktor 2 verlässt. Die Einmündung von Partikelleitung 17 zwischen den Vertrimmungen 11 und 13 von Reaktor 1 bewirkt eine homogenere Verteilung des Partikelstroms im Reaktor. Aufgrund der Gegenwart der Fluidisierung der Partikelleitung 17 könnte die Einmündung derselben auch den unteren Fluideinlass 11 ersetzen. Generell sind die Verhältnisse der jeweiligen Partikelströme und die Verweilzeiten der Teilchen in den einzelnen Reaktorabschnitten durch geeignete Wahl der jeweiligen Gasströme gut steuerbar.

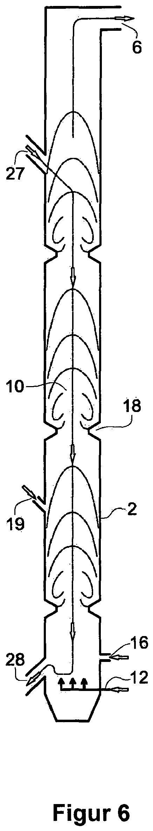

Reaktor 2 aus Fig. 1 ist durch insgesamt sechs Strömungsregler 18 in sieben Reaktionszonen 10 unterteilt, in denen - wiederum anhand der Gasströme, aber auch durch die Art und Bauweise der Strömungsregler steuerbar - die im System enthaltenen Feststoffe unterschiedliche Aufenthaltswahrscheinlichkeiten und Verweilzeiten haben. Durch die steuerbare Stärke des Fluid- oder Gasstroms durch den zweiten Reaktor sind auch die Kontaktzeiten zwischen den Reaktionspartnern in den einzelnen Reaktionszonen ihrerseits steuerbar.
Die Gegenwart der Wirbelschichtpartikel, deren globale Strömungsrichtung und Verwirbelung in den Reaktoren und die Reaktionszonen der Letzteren sind in Fig. 1 und weiteren beiliegenden Zeichnungen durch strichlierte Linien angedeutet. In Fig. 6, die eine Detailansicht eines durch Strömungsregler in Reaktionszonen unterteilten zweiten Reaktors 2 in einem Wirbelschichtreaktorsystem, allerdings ohne Rückführung von Partikeln in den zweiten Reaktor, zeigt, ist dies besonders gut zu erkennen. Die Art der Strömungsregler 18 ist, wie oben bereits erwähnt wurde, nicht speziell eingeschränkt. In Fig. 1 und Fig. 6 sind Ausführungsformen mit (z.B. ringförmigen) Einschnürungen oder Verengungen des Reaktorquerschnitts dargestellt.
In der bevorzugten Ausführungsform in Fig. 1 sind an 16 und 19 Zuleitungen zum Reaktor 2 eingezeichnet, deren Zweck nicht speziell eingeschränkt ist, die aber für das Beispiel CLC Brennstoffzuleitungen sein werden. So kann beispielsweise an 16 ein gasförmiger Brennstoff wie etwa Methan eingeleitet werden, während an 19 ein zumindest teilweise aus Feststoffen bestehender Feed, z.B. Kohle, zugeführt werden kann.

Als Ganzes betrachtet kann in dem in Fig. 1 gezeigten Wirbelschichtreaktorsystem für das Beispiel CLC ein Sauerstoffträger im Luftreaktor 1 (re-)oxidiert und erhitzt werden, wonach er über Partikelleitung 7 in die oberste Reaktionszone 10 des Brennstoffreaktors 2 eingespeist wird, von wo er innerhalb der Wirbelschicht dieses Reaktors kontinuierlich nach unten sinkt und dabei in den einzelnen Reaktionszonen für die Oxidation, d.h. Verbrennung, eines oder mehrerer Brennstoffe sorgt, die an 16 und/oder 19 eingespeist werden können. Anschließend wird der Sauerstoffträger in den Luftreaktor 1 zurückgeführt und dort regeneriert. In Brennstoffreaktor 2 können feste, aber relativ feinteilige Verbrennungsrückstände, wie z.B. Flugasche bei der Verbrennung von Kohle, an Partikelabscheider 4 aufgefangen und über Partikelleitung 8 in das System zurückgeführt werden, wo sie erneut mit dem Sauerstoffträger in Kontakt kommen, was eine vollständige Verbrennung des Brennstoffs gewährleistet. Gleichzeitig kann aber auch ein weiterer, z.B. gasförmiger Brennstoff wie etwa Methan, eingespeist werden, so dass in den einzelnen Reaktionszonen 10 unterschiedliche Mengen verschiedener Reaktionspartner vorliegen, wodurch darin auch unterschiedliche Temperaturen herrschen und unterschiedliche Summenreaktionen ablaufen können. Diese erzeugen beispielsweise variierende Wärmemengen und variierende Größen der festen Reaktionsprodukte, je nach der Lage der jeweiligen Reaktionszone. In Summe werden dadurch die Vollständigkeit der Verbrennungsreaktionen und damit die Ausbeuten und die Effizienz des Prozesses insgesamt gefördert.
In Fig. 2 wird eine alternative bevorzugte Ausführungsform der Erfindung gezeigt, bei der die Strömungsregler 18 in Form von zickzackförmigen Umlenkungen oder "Rutschen" mit zusätzlichen, gewinkelt dargestellten Einbauten ausgeführt sind. Die Wirkungsweise dieses Systems ist dieselbe wie für Fig. 1 beschrieben.
Fig. 3 zeigt in Reaktor 2 eine Kombination aus den Bauweisen der Strömungsregler 18 aus Fig. 1 und jenen aus Fig. 2, nämlich sowohl Einschnürungen des Reaktorquerschnitts als auch Umlenkungen, was noch weiter verlängerte Verweilzeiten der Partikel, z.B. Metalloxid- Sauerstoffträgerpartikel, in den einzelnen Reaktionszonen bewirken kann. Auch bei dieser Ausführungsform sind stetige Querschnittsveränderungen innerhalb der Reaktionszonen des Reaktors 2 gegeben. Zusätzlich ist bei dieser Ausführungsform jedoch auch der Reaktor 1 mit Strömungsreglern 21 versehen, die diesen in mehrere Reaktionszonen 9 unterteilen. Bei Verwendung für CLC kann dies beispielsweise eine stufenweise und damit potenziell schonendere Regeneration des Sauerstoffträgers im Luftreaktor 1 ermöglichen, insbesondere in Fällen, bei denen über Zuleitung 15 Brennstoff zum Erhitzen des Sauerstoffträgers in den Luftreaktor eingespeist wird.
Darüber hinaus ist am unteren Ende des Reaktors 2, d.h. in Richtung des zwischen den Reaktoren zirkulierenden Partikelstroms, zwischen dem zweiten und dem ersten Reaktor, ein dritter Reaktor 20 vorgesehen, der als blasenbildender oder BFB-Reaktor und somit nicht partikeltransportierend dargestellt ist. Der dritte Reaktor ist jedoch, wie auch jeder weitere Reaktor, nicht darauf beschränkt und kann an beliebiger Stelle des Wirbelschichtreaktorsystems implementiert und mit beliebigen Strömungszuständen ausgeführt sein, d.h. stationär oder transportierend, als homogene, blasenbildende, stoßende, turbulente oder schnelle Wirbelschicht oder auch pneumatisch transportierend (vgl. Grace und Bi, 1997). Aus dem dritten Reaktor 20 leitet die Partikelleitung 17 zum Rücktransport der Partikel in Reaktor 1 aus.
In der stationären Wirbelschicht im dritten Reaktor 20 können sich entweder vorwiegend "schwerere" Partikel befinden, während im darüber angeordneten Reaktor 2 "leichtere" zu finden sind, oder es wird durch geeignete Steuerung der Fluidzufuhr an 12 und 14 sowie entsprechende Dimensionierung der Einschnürungen 18 dafür gesorgt, dass ein gewisser Anteil von Partikeln derselben Art sich stationär in Reaktor 20 aufhält, während der Rest in Reaktor 2 schnell fluidisiert wird. Ebenso können die durch alle drei Reaktoren zirkulierten Partikel, d.h. der globale Feststoffumlauf, aus im Wesentlichen denselben oder unterschiedlich "schweren", also unterschiedlich leicht fluidisierbaren Partikeln bestehen.
Aufgrund der bei geringer Höhe aus dem dritten Reaktor 20 ausleitenden Partikelleitung 17 sowie aus dem oben erwähnten Grund der Aufenthaltswahrscheinlichkeiten wird sich ein mehr oder weniger großer Anteil derselben Partikel wie in Reaktor 20 auch in Reaktor 1 befinden, der maßgeblich von der Steuerung der Fluidströme in den drei Reaktoren und von der Stärke des Fluidisierungsstroms der Leitung 17 abhängt. Ob diese am Boden von Reaktor 1 ein stationäres Bett bilden oder zur Gänze am Kopf ausgetragen werden, hängt wiederum von der Stärke der Fluidströme, in diesem Fall an 11 und 13 und in Leitung 17, sowie von der Fluidisierbarkeit der Partikel ab. Bei entsprechender Fluidisierung und Füllhöhe der Wirbelbettpartikel kann sich ein Füllstandgleichgewicht zwischen erstem und drittem Reaktor ausbilden, was einen konstanten Betrieb des Wirbelschichtreaktorsystems gewährleistet.
Bei erneuter Betrachtung eines beispielhaften CLC-Prozesses kommt es bei Einspeisung von Brennstoff, wie z.B. Kohle, über Zuleitung 16 direkt in den dritten Reaktor 20 mit der stationären Wirbelschicht darin zu einem intensiven ersten Kontakt der Kohle mit den Sauerstoffträgerpartikeln, die sowohl Reaktor 2 als auch Reaktor 20 im Gegenstrom zu den Gasströmen darin, aber auch zu den Kohleteilchen durchlaufen. Nach dieser ersten Verbrennungsphase sind die aus der Kohle gebildeten Reaktionsprodukte leichter fluidisierbar und werden verstärkt in den Bereich des Reaktors 2 hochgewirbelt, in dessen Reaktionszonen 10 sie mit zunehmend frischem Sauerstoffträger in Kontakt kommen. Nach dem Austrag am Kopf von Reaktor 2 werden die Teilchen im Partikelabscheider 4 aufgefangen und über Partikelleitung 8 in eine der unteren Reaktionszonen von Reaktor 2 zurückgeführt. Von dort werden sie zum überwiegenden Teil erneut in der Wirbelschicht des Reaktors 2 hochgetragen und kommen ein weiteres Mal mit Sauerstoffträger in Kontakt. Auf diese Weise wird die vollständige Verbrennung des Brennstoffs unterstützt.
Fig. 4 zeigt eine erweiterte Ausführungsform des Wirbelschichtreaktorsystems aus Fig. 3, bei der zusätzlich die Partikelabscheider der beiden Reaktoren zweistufig ausgeführt sind, so dass Reaktor 1 zwei Partikelabscheider 3 und 23 und Reaktor 2 zwei Partikelabscheider 4 und 24 umfasst. Die beiden ursprünglichen Partikelabscheider 3 und 4 sind hier als Schwerkraftabscheider angedeutet. Dabei gibt Abscheider 3 die darin aufgefangenen Partikel wiederum in Partikelleitung 7 ab, aus der sie an Einmündungsstelle 27 in den Reaktor 2 eingespeist werden, während Partikelabscheider 4 die Partikel am Kopf von Reaktor 2 direkt in diesen zurückführt. Beide zweiten Stufen, d.h. die Partikelabscheider 23 und 24 leiten die darin gesammelten Partikel über Partikelleitungen 25 bzw. 26 in den zweiten Reaktor ein. Im vorliegenden Fall münden beide dieser Partikelleitungen in dieselbe, nämlich die unterste Reaktionszone 22 des zweiten Reaktors 2 ein. Unterhalb dieser befindet sich wiederum der dritte Reaktor 20.

Zum Unterschied zur Ausführungsform aus Fig. 3 werden nach dem Austrag am Kopf von Reaktor 2 schwerere Partikel, die noch einen höheren Anteil an brennbaren Bestandteilen aufweisen, im ersten Partikelabscheider 4 aufgefangen und direkt in den Reaktor 2 zurückgeführt, z.B. einfach zurückrieseln gelassen. Leichtere Teilchen, die z.B. vor allem aus Asche bestehen, werden in der zweiten Abscheiderstufe 24 aufgefangen und über Partikelleitung 26 wiederum in Reaktor 2 zurückgeführt. Die in der zweiten Stufe 23 des Partikelabscheiders von Reaktor 1 aufgefangenen Partikel, bei denen es sich beispielsweise um mitgerissene Verbrennungsprodukte oder um aufgrund von Abrieb leichter fluidisierbar gewordene Sauerstoffträgerteilchen handelt, treffen in der untersten Reaktionszone 22 von Reaktor 2 auf die aus dem dritten Reaktor 20 aufgestiegenen Brennstoffpartikel, auf jene, die über Partikelleitung 26 zurückgeführt wurden, auf von oben herabsinkende Sauerstoffträgerteilchen sowie gegebenenfalls auf über Zuleitung 19 eingespeiste Festbrennstoffpartikel, die sich in der Wirbelschicht der Brennstoffraktors in überwiegendem Maße abwärts bewegen werden. Auf diese Weise passieren auch im System enthaltene leichtere Partikel den Reaktor 2 im Gegenstrom zu schwereren, was erneut die Vollständigkeit der in Reaktor 2 ablaufenden (Verbrennungs-)Reaktionen fördert.

Darüber hinaus weisen jeweils übereinander liegende Reaktionszonen 10 unterschiedliche Querschnitte auf, wodurch darin auch jeweils unterschiedliche Fluidisierungszustände vorliegen, wie dies erneut durch strichlierte Linien angedeutet ist.

Weiters ist die Vertrimmung des dritten Reaktors 20 auf unterschiedlichen Höhen als bei der Ausführungsform aus Fig. 3 vorgesehen. Hier, in Fig. 4, mündet die untere Fluidzuleitung 12 im Boden von Reaktor 20 in diesen ein, was die Fluidisierung des stationären Wirbelbetts dieses Reaktors unterstützt. Leitung 17 leitet wiederum bei relativ geringer Höhe, nämlich an 28, aus Reaktor 20 aus.

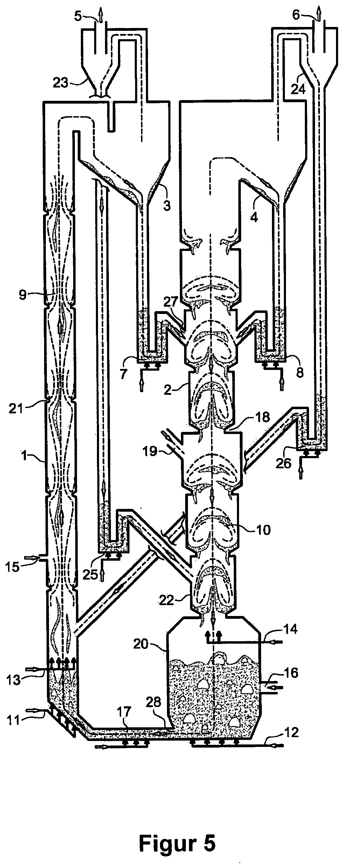

Fig. 5 zeigt eine ähnliche Ausführungsform wie Fig. 4 mit zweistufigen Partikelabscheidern 3, 4, 23, 24 und einem dritten Reaktor 20. Die Unterschiede zu Fig. 4 betreffen die Rückführung der im zweistufigen Partikelabscheider 4, 24 aufgefangenen Teilchen, die Einmündung von Partikelleitung 7 in den zweiten Reaktor 2 sowie die Lage der Partikelleitung 17.

Die erste Stufe 4 des Partikelabscheiders von Reaktor 2 leitet in der in Fig. 5 gezeigten Ausführungsform die darin abgeschiedenen Teilchen nicht von oben in den Kopf des Reaktors, sondern wiederum über eine Rückführung 8 in eine tiefer liegende Reaktionszone 10 zurück, in die auch die Partikelleitung 7 aus dem ersten Reaktor 1 einmündet. Bei Durchführung eines CLC-Prozesses kommen somit die aus dem Abscheider 4 in den Brennstoffreaktor 2 rezyklierten Feststoffe, die vorwiegend aus Brennstoffpartikeln bestehen, in dieser Reaktionszone mit frischem Sauerstoffträger aus dem Luftreaktor in Kontakt, was erneut deren vollständige Verbrennung unterstützt.

Die leichteren, in der zweiten Abscheiderstufe 24 aufgefangenen Partikel werden hingegen direkt in den ersten Reaktor, also den Luftreaktor, eingespeist. Dies ist speziell in Fällen nützlich, wo der oder die festen Brennstoffe im Brennstoffreaktor weitestgehend rückstandfrei verbrennen, so dass die in Abscheiderstufe 24 gesammelten Partikel im Wesentlichen aus Sauerstoffträger, z.B. Abrieb desselben, bestehen, die dadurch ohne weitere Passage des Brennstoffreaktors zur Regeneration in den Luftreaktor übergeführt werden.

Schließlich mündet die Partikelleitung 17 zwischen drittem und erstem Reaktor jeweils am Boden des jeweiligen Reaktors aus bzw. ein. Durch den Fluidisierungsstrom der Leitung 17, aber auch durch jenen der unmittelbaren Fluidisierung 11 ist somit das Ausmaß des globalen Umlaufs steuerbar, d.h. wie groß der Anteil an Partikein ist, die vom dritten in den ersten Reaktor übergehen. Insbesondere kann sich bei Wahl entsprechender Fluidisierungsbedingungen umso eher ein Füllstandsgleichgewicht zwischen den Partikeln im ersten und dritten Reaktor ausbilden.
Fig. 6 zeigt, wie bereits erwähnt, eine Detailansicht eines in Reaktionszonen unterteilten zweiten Reaktors 2 in einem Wirbelschichtreaktorsystem, allerdings ohne Rückführung von Partikeln in den zweiten Reaktor und nur mit einfacher Fluidisierung 12. Hier sind sowohl das Gegenstromprinzip zwischen den an 27 eingespeisten und an 28 ausgeleiteten Wirbelschichtpartikeln und dem an 12 zugeführten und an 6 ausgeleiteten Fluidstrom als auch die Verwirbelung der Partikel innerhalb der Reaktionszonen 10 besonders gut zu erkennen.

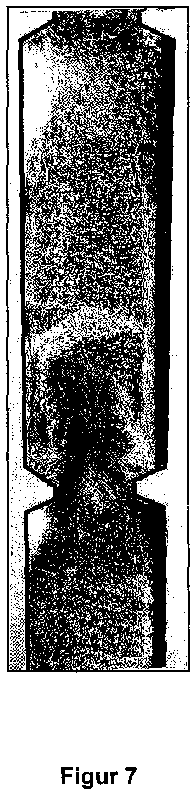

Fig. 7 ist schließlich eine Detailfotografie einer Reaktionszone eines Wirbelschichtreaktors zwischen zwei Strömungsreglern, aus der die Verteilung der Wirbelschichtpartikel innerhalb der Reaktionszone gut ersichtlich ist.
Somit sollte durch die obigen, lediglich zu Illustrationszwecken angeführten und daher nicht als Einschränkung aufzufassenden Beispiele hinreichend belegt sein, dass in Form der vorliegenden Erfindung ein verbessertes Verfahren mit einem Wirbelschichtreaktorsystem zur Durchführung chemischer Reaktionen bereitgestellt wird, in dem diese Reaktionen rascher, vollständiger, mit höheren Ausbeuten und somit auf wirtschaftlichere Weise durchführbar sind, als dies nach dem Stand der Technik möglich ist.

## Patentansprüche

1. Verfahren zum Betreiben eines Wirbelschichtreaktorsystems aus zumindest zwei Wirbelschichtreaktoren zur Durchführung chemischer Reaktionen, wobei ein erster und ein zweiter Reaktor (1, 2) jeweils als zirkulierende Wirbelschicht betrieben werden, indem über jeweils zumindest einen Fluideinlass (11, 12) im Boden des jeweiligen Reaktors (1, 2) und/oder unmittelbar oberhalb davon Fluid zur Erzeugung einer schnell fluidisierten Partikelwirbelschicht eingeleitet wird und über eine einen Partikelabscheider (3) umfassende Partikelleitung (7) Wirbelschichtpartikel vom ersten in den zweiten Reaktor transportiert werden sowie über eine in der unteren Hälfte des zweiten Reaktors (2) ausleitende Partikelleitung (17) Wirbelschichtpartikel in den ersten Reaktor (1) rücktransportiert werden und über eine einen Partikelabscheider (4) umfassende Partikelrückführung (8) Wirbelschichtpartikel aus dem zweiten Reaktor (2) rückgeführt werden,
**dadurch gekennzeichnet, dass** zumindest im zweiten Reaktor (2) durch einen oder mehrere Strömungsregler (18, 21) in Form von Verengungen des Reaktorquerschnitts voneinander getrennte, jeweils über einem Strömungsregler (18, 21) liegende Reaktionszonen (9, 10, 22) zur Durchführung der chemischen Reaktionen vorgesehen sind und die Partikelleitung (7) oberhalb zumindest eines Strömungsreglers (18) in den zweiten Reaktor (2) einmündet, wodurch in den Reaktionszonen (10, 22) oberhalb jeglicher Strömungsregler (18), die unterhalb der Einmündung der Partikelleitung (7) liegen, Partikel im Gegenstrom zum Fluidstrom geführt werden; und
dass über die Partikelrückführung (8) Partikel unterhalb zumindest eines im zweiten Reaktor (2) vorgesehenen Strömungsreglers (18) in den zweiten Reaktor (2) und/oder in die untere Hälfte des ersten Reaktors (1) eingeleitet werden, wodurch einen Anteil dieser Partikel im zweiten Reaktor (2) wieder aufsteigt und somit im Gegenstrom zu über die Partikelleitung (7) aus dem ersten Reaktor (1) eingeleiteten Partikeln geführt wird.

2. Verfahren nach Anspruch 1, **dadurch gekennzeichnet, dass** über die Partikelleitung (7) Partikel oberhalb eines obersten im zweiten Reaktor (2) vorgesehenen Strömungsreglers (18) in den zweiten Reaktor (2) eingeleitet werden, wodurch in allen Reaktionszonen (10, 22) des zweiten Reaktors (2) Partikel im Gegenstrom zum Fluidstrom geführt werden.

3. Verfahren nach Anspruch 1 oder 2, **dadurch gekennzeichnet, dass** der Partikelabscheider (3) und/oder der Partikelabscheider (4) zweistufig ausgeführt ist/sind, um jeweils leichtere bzw. schwerere Partikel aufzufangen und in unterschiedlicher Höhe in den zweiten Reaktor einzuleiten.

4. Verfahren nach Anspruch 3, **dadurch gekennzeichnet, dass** während der Durchführung der chemischen Reaktionen Partikel unterschiedlicher Größe im Gegenstrom zueinander geführt werden.

5. Verfahren nach einem der Ansprüche 1 bis 4, **dadurch gekennzeichnet, dass** die chemischen Reaktionen im Wirbelschichtreaktorsystem die Umsetzung von Brennstoffen umfassen.

6. Verfahren nach Anspruch 5, **dadurch gekennzeichnet, dass** Brennstoffe zwischen zwei Reaktionszonen (9, 10, 22) und/oder in eine unterste Reaktionszone (22) und/oder in einen zwischen dem ersten und zweiten Reaktor zwischengeschalteten dritten Reaktor (20) eingespeist werden.

## Claims

1. A process for operating a fluidized bed reactor system consisting of at least two fluidized bed reactors for carrying out chemical reactions, a first reactor and a second reactor (1, 2) being operated as circulating fluidized beds by introducing fluid via at least one fluid inlet (11, 12) in the bottom of the respective reactor (1, 2) and/or immediately above said bottom to generate a fast fluidized particle bed and by transporting fluidized bed particles via a particle line (7), which comprises a particle separator (3), from the first to the second reactor and by returning them via a draining particle line (17) located in the lower half of the second reactor (2) into the first reactor (1) and by returning them via a particle feedback line (8), which comprises a particle separator (4), from the second reactor (2),
**characterized in that** reaction zones (9, 10, 22) separated by one or more flow controllers (18, 21) in the form of constrictions of the reactor cross-section for carrying out chemical reactions are provided at least in the second reactor (2), each being situated above one flow controller (18, 21), and **in that** the particle line (7) opens into the second reactor (2) above at least one flow controller (18), so that particles in the reaction zones (10, 22) above any flow controller (18) which is situated below the opening of said particle line (7) are transported in countercurrent flow to the fluid flow; and
**in that** particles located below at least one flow controller (18) which is provided in the second reactor (2) are introduced into the second reactor (2) and/or into the lower half of the first reactor (1) via said particle feedback line (8), so that a portion of these particles in the second reactor (2) move upwards again and are thus transported in countercurrent flow to particles introduced from the first reactor (1) via the particle line (7).

2. The process according to claim 1, **characterized in that** particles are introduced into the second reactor (2) via said particle line (7) above an uppermost flow controller (18) provided in the second reactor (2), so that particles in all reaction zones (10, 22) of the second reactor (2) are transported in countercurrent flow to the fluid flow.

3. The process according to claim 1 or 2, **characterized in that** the particle separator (3) and/or the particle separator (4) is/are (a) double/stage separator(s), in order to collect lighter or heavier particles and to introduce them at different heights into the second reactor.

4. The process according to claim 3, **characterized in that** particles of different sizes are transported countercurrent-wise to each other while chemical reactions are carried out.

5. The process according to any one of the claims 1 to 4, **characterized in that** the chemical reactions carried out in the fluidized bed reactor system comprise the conversion of fuels.

6. The process according to claim 5, **characterized in that** fuels are introduced between two reaction zones (9, 10, 22) and/or into a lowermost reaction zone (22) and/or into a third reactor (20) interposed between the first and second reactors.

## Revendications

1. Procédé pour opérer un système de réacteurs à lit fluidisé composé d'au moins deux réacteurs à lit fluidisé pour effectuer des réactions chimiques, un premier et un deuxième réacteur (1, 2) étant chacun opéré comme lit fluidisé circulant, en introduisant un fluide par au moins une entrée (11, 12) de fluide dans le fond du réacteur correspondant (1, 2) et/ou immédiatement au-dessus du fond pour créer un lit fluidisé de particules rapidement fluidisé, et en transportant des particules de lit fluidisé à travers une conduite (7) de particules comprenant un séparateur (3) de particules du premier au deuxième réacteur, et en les retournant du deuxième réacteur (2) à travers une conduite (8) de retour de particules comprenant un séparateur (4) de particules,
**caractérisé en ce que** des zones (9, 10, 22) de réaction, séparées par un ou plusieurs régulateurs (18, 21) de débit ayant la forme de constrictions de la section transversale du réacteur et chacune disposée au-dessus d'un régulateur (18, 21), sont prévues au moins dans le deuxième réacteur (2) pour effectuer des réactions chimiques, et **en ce que** la conduite (7) de particules débouche dans le deuxième réacteur (2) au-dessus du au moins un régulateur (18) de débit de sorte que des particules dans les zones (10, 22) de réaction au-dessus de tout régulateur (18) de débit situé en-dessous de la débouchée de la conduite (7) de particules sont transportées vers le courant de fluide en contre-courant; et
**en ce que** des particules sont introduites dans le deuxième réacteur (2) et/ou dans la moitié inférieure du premier réacteur (1) en-dessous d'au moins un régulateur (18) de débit prévu dans le deuxième réacteur (2) à travers la conduite (8) de retour de particules, de sorte qu'une partie de ces particules dans le deuxième réacteur (2) remonte vers le haut et est ainsi transportée en contre-courant vers des particules introduites depuis le premier réacteur (1) à travers la conduite (7) de particules.

2. Procédé selon la revendication 1, **caractérisé en ce que** des particules sont introduites dans le deuxième réacteur (2) à travers la conduite (7) au-dessus d'un régulateur (18) de débit supérieur, prévu dans le deuxième réacteur (2), de sorte que des particules dans toutes les zones (10, 22) de réaction du deuxième réacteur (2) sont transportées en contre-courant vers le courant de fluide.

3. Procédé selon l'une des revendications 1 ou 2, **caractérisé en ce que** le séparateur (3) de particules et/ou le séparateur (4) de particules est/sont un/des séparateur(s) à deux phases pour capter des particules plus légères ou plus lourdes et les introduire dans le deuxième réacteur à des hauteurs différentes.

4. Procédé selon la revendication 3, **caractérisé en ce que** pendant la réalisation des réactions chimiques des particules de taille différente sont transportées en contre-courant les unes vers les autres.

5. Procédé selon une quelconque des revendications 1 à 4, **caractérisé en ce que** les réactions chimiques réalisées dans le système de réacteurs à lit fluidisé comprennent la conversion de combustibles.

6. Procédé selon la revendication 5, **caractérisé en ce que** des combustibles sont introduits entre deux zones (9, 10, 22) de réaction et/ou dans une zone (22) de réaction inférieure et/ou dans un troisième réacteur (20) inséré entre le premier et le deuxième réacteur.
